Europäisches Patentamt

(19) European Patent Office

Office européen des brevets

(11) Numéro de publication: **0 034 991**
**B1**

(12) # FASCICULE DE BREVET EUROPEEN

(45) Date de publication du fascicule du brevet:
16.05.84

(51) Int. Cl.³: **G 01 N 3/06**, G 01 B 5/30

(21) Numéro de dépôt: 81400284.6

(22) Date de dépôt: 24.02.81

(54) **Extensomètre à béton.**

(30) Priorité: 26.02.80 FR 8004195

(43) Date de publication de la demande:
02.09.81 Bulletin 81/35

(45) Mention de la délivrance du brevet:
16.05.84 Bulletin 84/20

(84) Etats contractants désignés:
BE CH DE GB LI

(56) Documents cités:
US - A - 3 151 399
US - A - 3 696 512
US - A - 3 974 686

THE REVIEW OF SCIENTIFIC INSTRUMENTS, vol. 38,
no. 6, juin 1967 New York, USA M.M. SINGH et al.:
"Lateral extensometer for brittle materials", pages
769-771
JOURNAL OF SCIENTIFIC INSTRUMENTS, vol. 34, no. 7,
juillet 1957, Londres, GB, E.R. LEEMAN et al. "A
compressometer for obtaining stress-strain curves of
rock specimens up to fracture", pages 279-280

(73) Titulaire: **Colson, André, 43, Sentier des Frettes,
F-94230 Cachan (FR)**
Titulaire: **Boulay, Claude, 3, Résidence Danielle
Casanova, F-93440 Dugny (FR)**

(72) Inventeur: **Colson, André, 43, Sentier des Frettes,
F-94230 Cachan (FR)**
Inventeur: **Boulay, Claude, 3, Résidence Danielle
Casanova, F-93440 Dugny (FR)**

(74) Mandataire: **Flavenot, Bernard, Société S.E.D.I.C. 40 rue
Victor Basch, F-92120 Montrouge (FR)**

Extensomètre à béton

L'invention a pour objet un extensomètre à béton, du type décrit dans le préambule de la revendication 1, utilisé pour mesurer les déformations longitudinales, que subissent des éprouvettes normalisées, cylindriques, en béton, soumises à des charges de compression, et auquel peuvent être associés des dispositifs de mesure des déformations radiales ou transversales de ces éprouvettes, afin de pouvoir déterminer le coefficient de Poisson du matériau testé.

Les extensomètres à béton connus du type comme ceux qui sont décrits dans les documents suivants:

»The review of Scientific instruments, vol. 38, no. 6, juin 1967, New-York USA. — MM. Singh et al. »Lateral extensometer for brittle materials — pages 769—771.«, US-A-3 974 686 (M. Van Mastrigt, comprennent deux couronnes quasi-identiques, maintenues, dans une position initiale prédéterminée, à l'aplomb l'une au-dessus de l'autre par des entretoises de liaison amovibles, qui permettent, de plus, une mise en place simultanée des couronnes autor d'une éprouvette de béton. Chacune des couronnes est munie d'une pluralité de pointeaux (en général, trois, disposés à 120° l'un des autres sur les couronnes), qui sont susceptibles d'être serrés contre l'éprouvette, de façon à solidariser, avant l'essai de compression sur l'éprouvette cylindrique en béton, chaque couronne à un plan de section de l'éprouvette, déterminé par les pointeaux portés par cette couronne. Les déplacements relatifs des deux sections sont mesurés par des capteurs de déplacement longitudinaux, disposés entre les couronnes, ce qui permet ainsi de déterminer la déformation longitudinale de l'éprouvette.

Tous les extensomètres à béton connus utilisent des pointeaux liés aux couronnes par des liaisons hélicoïdales ordinaires (système visécrou); c'est-à-dire que les pointeaux, dont le corps présente un filetage externe, sont montés dans des perçages taraudés pratiqués dans les couronnes. Ce type de liaison présente un jeu radial et ne permet pas de déplacement des pointeaux, parallèlement à euxmêmes, par rapport aux couronnes, lors des gonflements de l'éprouvette résultant de ses déformations transversales sous l'effet de la charge en compression. En conséquence, les extensomètres à béton connus présentent les inconvénients suivants: l'éprouvette se trouve frettée par les couronnes, et ses déformations ne se produisent pas librement, les mesures effectuées sont donc inexactes, notamment les valeurs relevées des contraintes à la rupture.

De plus, lors d'essais en chargement cyclique, seul l'enregistrement de la première mise en charge est correct. En effet, au cours de cette phase, les pointeaux pénètrent dans l'éprouvette, qui subit des déformations non élastiques, et, lors du déchargement, il apparaît un jeu entre les pointeaux, et donc la couronne, et l'éprouvette, les cycles suivants ne sont donc pas comparables au premier.

Enfin, les couronnes, qui sont solicitées radialement, se déforment, et ne peuvent donc pas être utilisées comme support de capteur de déplacement transversal.

Par la présente invention, on se propose de remédier à ces inconvénients, en permettant une libre dilatation de l'éprouvette, une action quasiment constante des pointeaux sur toutes les éprouvettes que l'on viendrait à utiliser, sans pénétration des pointeaux dans les éprouvettes, lors des phases de gonflement de ces dernières, ainsi que l'utilisation des couronnes pour l'installation des capteurs transversaux.

Plus précisément, la présente invention a pour objet un extensomètre à béton comportant au moins deux couronnes de supports, chacune des couronnes étant munie de moyens de préhension d'une éprouvette à tester, ces moyens ayant au moins une tête déplaçable par rapport à la couronne avec laquelle elle coopère, caractérisé par le fait que ladite tête est liée à la couronne avec laquelle elle coopère par un parallèlogramme déformable.

Dans des modes particuliers de réalisation, l'extensomètre à béton, selon l'invention, est tel que chacun des pointeaux est lié à la couronne correspondante par des moyens assurant un guidage prismatique du pointeau dans ses déplacements, parallèlement à lui-même, vis-à-vis de la couronne, et en ce que chaque pointeau est appliqué contre l'éprouvette par des moyens élastiques, ces moyens de guidage prismatiques étant, dans une forme préférée de réalisation, constitués, pour chaque pointeau, par une paire de lames flexibles, une extrémité de chacune des lames étant solidarisée à la couronne correspondante et l'autre extrémité de la lame supportant le pointeau, lié à la couronne par un quadrilatère déformable, et dont l'axe longitudinal est maintenu perpendiculaire à l'axe du cylindre défini par les couronnes. On assure ainsi une libre dilatation de l'éprouvette, ainsi que l'absence de pénétration des pointeaux dans l'éprouvette dans les phases de gonflement de celle-ci, ce qui est particulièrement avantageux lors des essais en chargement cyclique.

Avantageusement, de plus, la position de chaque pointeau est réglable par un écrou de positionnement, coopérant avec une extrémité filetée du pointeau, opposée à l'extrémité destinée à venir au contact de l'éprouvette, et disposée vers l'extérieur de la couronne, sur un support de pointeau dans lequel le pointeau est monté sur les moyens assurant son guidage primatique.

Chaque support de pointeau peut comprendre une butée intérieure et une butée extérieure, solidarisées, respectivement, à la face interne et à la face externe de la couronne correspondante, en appliquant contre cette dernière respectivement, le pointeau, et un chapeau, reliant les butées intérieure et extérieure, et présentant vers l'intérieur du boîtier-support de pointeau ainsi défini par le chapeau, la couronne et les butées, un appui pour un ressort prenant également appui contre un épaulement du pointeau, et constituant les moyens élastiques appliquant le pointeau contre l'éprouvette. On obtient ainsi que l'action des pointeaux sur l'éprouvette peut être considérée comme constante, et toujours la même pour toutes les éprouvettes.

Pour que cette action quasiment constante des pointeaux puisse être réglable, l'épaulement du pointeau est constitué par un écrou vissé sur une partie filetée du pointeau, et réalisant un écrou de réglage de l'effort d'application du pointeau contre l'éprouvette, délivré par le ressort.

Afin d'éliminer la composante longitudinale du déplacement des pointeaux, déplacés parallèlement à eux-mêmes vis-à-vis des deux couronnes, et résultant de la déformation du quadrilatère déformable, les moyens assurant le guidage prismatique des pointeaux sont disposés de manière identique sur les deux couronnes.

Les couronnes d'un tel extensomètre, sollicitées de manière constante, ne se déforment pas pendant les essais, et constituent donc des références géométriques sûres pour l'installation de supports susceptibles de recevoir un capteur sensible aux déformations transversales de l'éprouvette.

Dans le cas d'un tel montage de supports de capteurs transversaux sur l'une et/ou l'autre des couronnes, il est avantageux d'utiliser, pour ce faire, les moyens de montages des entretoises sur les couronnes, ces dernières étant amenées en appui contre des épaulements correspondants sur les entretoises pour assurer le positionnement initial des couronnes.

Les pointeaux ainsi que leur moyen de guidage prismatique et leur moyen d'application contre l'éprouvette, sont associés par paire de pointeaux, dont l'un, lié à la couronne supérieure, est disposé à l'aplomb au-dessus de l'autre, lié à la couronne inférieure.

Les paires de pointeaux ainsi associés, les entretoises et les capteurs de déplacements longitudinaux constituent trois ensembles de trois éléments, pour lesquels les éléments sont décalés à 120° l'un par rapport aux autres sur les couronnes, les ensembles étant également décalés angulairement l'un par rapport aux autres, les informations des trois capteurs de déplacements longitudinaux étant reçus par un conditionneur électronique calculant leur moyenne et délivrant un signal de mesure de ces déplacements.

L'invention sera mieux comprise à l'aide de l'exemple particulier de réalisation qui est décrit ci-après, en référence aux figures annexes dans lesquelles:

— la figure 1 est une demi-vue de dessus de l'extensomètre, partiellement coupée au niveau du boîtier-support du connecteur de liaison entre les capteurs et le conditionneur électronique,

— la figure 2 est une coupe partielle selon II-II sur la figure 1,

— la figure 3 est une coupe partielle selon III-III sur la figure 1,

— la figure 4 est une coupe partielle selon IV-IV sur la figure 1,

— la figure 5 est une vue en perspective d'un support de capteur transversal pouvant se monter sur l'extensomètre selon les figures 1 à 4.

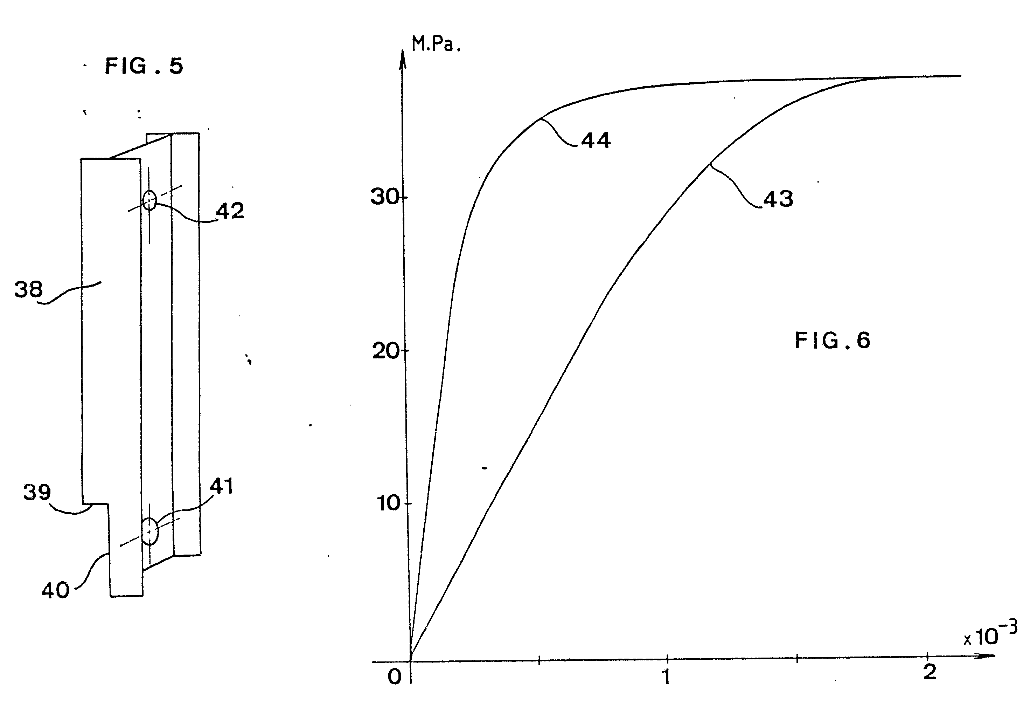

Enfin, la figure 6 est une courbe donnant l'évolution des contraintes en fonction des déformations mesurées par l'extensomètre selon les figures précédentes, pour une mesure longitudinale et une mesure transversale.

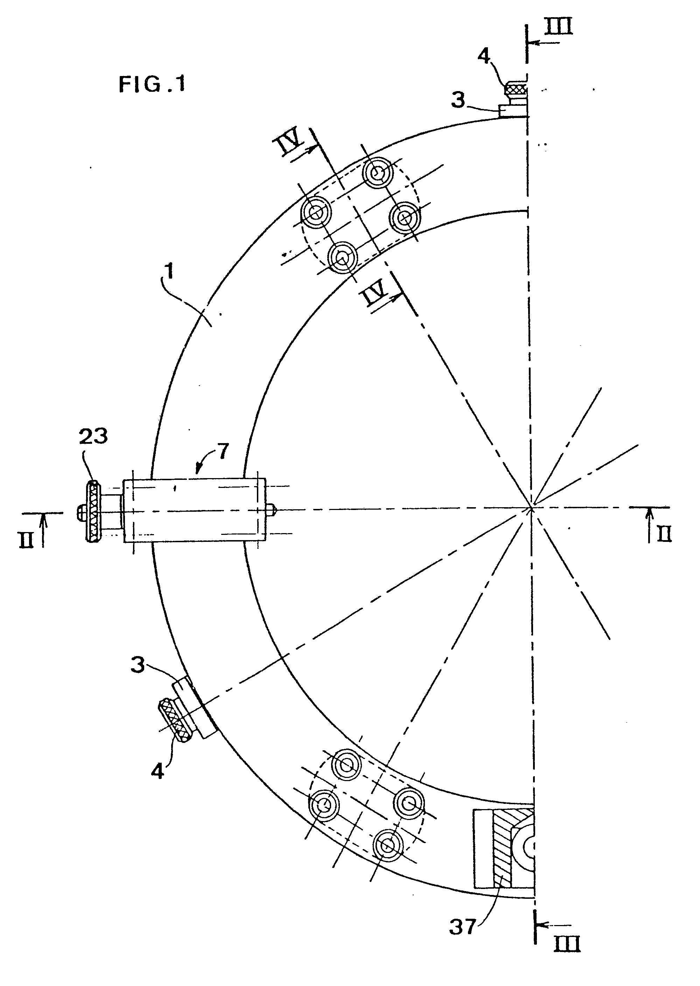

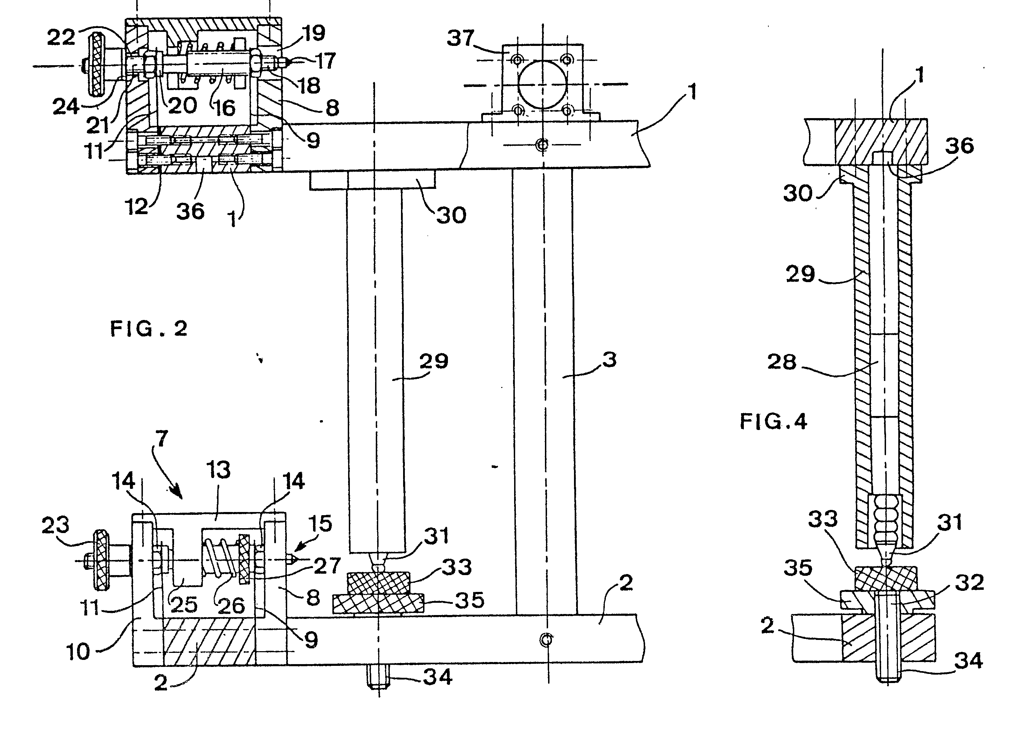

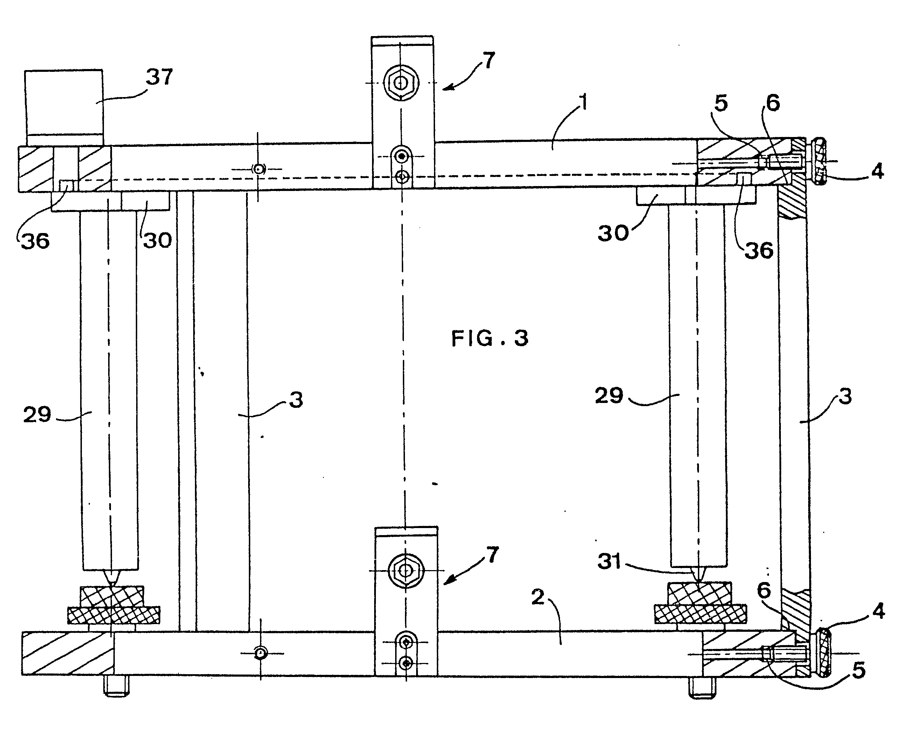

En référence aux figures 1 à 4, l'extensomètre est constitué de deux couronnes annulaires 1 et 2, quasi-identiques, de section rectangulaires, dont l'une, la couronne supérieure 1, est maintenue à l'aplomb au-dessus de l'autre, la couronne inférieure 2, par trois entretoises 3, disposées à 120° l'une des autres. Les entretoises 3, qui se fixent, chacune, aux deux couronnes 1 et 2, par deux vis d'assemblage 4 coopérant avec des perçages radiaux taraudés 5 aménagés dans les couronnes 1 et 2, présentent, de plus, des épaulements 6 contre lesquels les couronnes 1 et 2 sont mises en appui, afin d'assurer le maintien de la couronne supérieure 1 dans une position initiale prédéterminée vis-à-vis de la couronne inférieure 2. Ces entretoises 3, au moyen desquelles se réalise l'assemblage des deux couronnes 1 et 2, remplissent deux fonctions qui sont, d'une part, de permettre une mise en place simultanée des deux couronnes 1 et 2 autour d'une éprouvette en béton, cylindrique et normalisée, à tester, en posant l'extensomètre sur une couronne de positionnement, non représentée, préalablement disposée à plat sur une table de travail autour de l'éprouvette, et, d'autre part, de définir une longueur de base, de 160 mm par exemple, entre le plan de section défini par trois pointeaux supérieurs 15, et le plan de section défini par trois pointeaux inférieurs 15, comme expliqué plus en détail ci-après. Sur chacune des deux couronnes 1 et 2, sont montés trois boîtiers-supports 7, décalés à 120° les uns des autres, et tels que chacun des boîtiers-supports 7 de la couronne supérieure 1, soit à l'aplomb, au-dessus de l'un des boîtiers-supports 7 de la couronne inférieure 2, les paires de boîtiers-supports 7 ainsi définies étant décalées angulairement de 30° par rapport aux entretoises 3. Chaque boîtier-support 7 est constitué d'une butée, intérieure 8, vissée par son pied sur la face latérale interne de la couronne 1 ou 2 correspondante, en appliquant contre cette couronne l'extrémité inférieure d'une lame flexible 9, d'une butée extérieure 10, vissée également par son pied sur la face latérale externe de la couronne correspondante 1 ou 2, en appliquant contre cette couronne l'extrémité inférieure d'une autre lame flexible 11, de même longueur que la lame 9, avec interposition d'une cale d'épaisseur 12, et enfin, d'un chapeau 13, reliant les butée intérieure 8 et extérieure 10, et fixé sur ces dernières.

L'extrémité supérieure de la lame flexible 9 est retenue entre un écrou 14 et un épaulement 16 d'un pointeau 15, dont la pointe 17 prolonge une partie filetée 18, sur laquelle est reçue l'écrou 14 correspondant, et qui traverse une lumière 19 pratiquée dans la butée intérieure 8.

De façon analogue, l'extrémité supérieure de la lame flexible 11 est retenue entre un autre écrou 14 et un épaulement 20 du pointeau 15, cet autre écrou 14 étant reçu sur une queue filetée 21 du pointeau 15, qui traverse une lumière 22 pratiquée dans la butée extérieure 10, et sur laquelle est également vissé un écrou 23 de positionnement du pointeau 15, une rondelle 24 étant interposée entre l'écrou 23 et la butée intérieure 10, vers l'intérieur du boîtier-support 7, le chapeau 13 présente une butée 25 contre laquelle s'applique une extrémité d'un ressort 26 dont l'autre extrémité prend appui contre un écrou 27 vissé sur le filetage externe présenté par l'épaulement 16 de pointeau 15, de sorte que l'écrou 27 constitue un écrou de réglage de la force d'application du pointeau 15 contre l'éprouvette, qui est choisie de l'ordre de 100 Newton.

De la sorte, chacun des six pointeaux 15, monté sur un quadrilatère déformable, et dont l'axe longitudinal est maintenu perpendiculaire à l'axe du cylindre défini par les couronnes 1 et 2 (c'est-à-dire à l'axe de l'éprouvette cylindrique), est lié à la couronne 1 ou 2 correspondante par les lames élastiques 9 et 11, réalisant un guidage prismatique sans jeu, chacun des pointeaux 15 étant plaqué contre l'éprouvette par un ressort 26 à effort réglable, la position de chacun des pointeaux 15 étant réglable grâce à l'écrou de positionnement 23; chacune des couronnes 1 et 2 peut ainsi être rendue solidaire d'un plan de section d'une éprouvette grâce aux trois pointeaux 15 qui lui sont liés. Les pointeaux 15 sont reliés aux couronnes 1 et 2 par un ensemble d'éléments, notamment de guidage, qui sont montés de manière identique sur les deux couronnes 1 et 2. Dans cet exemple, les pointeaux sont montés de manière identique au-dessus des deux couronnes 1 et 2. On élimine ainsi la composante longitudinale du déplacement de chaque pointeau 15, qui résulte de la déformation du quadrilatère déformable sonstitué par le pointeau 15 monté sur ses deux lames flexibles 9 et 11 fixées sur la couronne 1 ou 2.

Les déplacements relatifs des deux plans de section définis respectivement par trois pointeaux supérieurs et trois pointeaux inférieurs portés respectivement par ces deux couronnes 1 et 2 sont mesurés par trois capteurs de déplacements longitudinaux 28, du type à transformateur différentiel, logé chacun dans un carter 29, dans lequel le capteur 28 est retenu par des vis de pression à bout plat. Les trois carters 29 présentent chacun une embase 30 par laquelle ils se trouvent vissés sous la couronne supérieure 1, à 120° l'un des autres, avec un décalage angulaire de 30° par rapport aux entretoises 3 et de 60° par rapport aux boîtiers supports 7 recevant les pointeaux 15. La tête 31 de chacun des capteurs 28 s'appuie contre la tête 33 d'une vis micrométrique 32, vissée sur la couronne inférieure 2 qu'elle traverse, et dont l'extrémité de la tige 34 fait office de pied pour l'extensomètre. Ces vis micrométriques 32 permettent chacune d'effectuer le réglage du zéro du capteur 28 correspondant. Un contre-écrou 35, monté sur la vis 32, entre la tête 33 de cette dernière et la surface supérieure de la couronne inférieure 2, permet de bloquer la vis micrométrique 32 dans une position qui correspond au zéro du capteur 28.

Les trois capteurs 28 sont reliés par des câbles, disposés dans la saignée 36 pratiquée dans la face inférieure de la couronne supérieure 1, à un boîtier-support de connecteur 37, porté par la couronne supérieure 1, et dans lequel peut se brancher un connecteur de liaison à un conditionneur électronique, recevant les informations fournies par les trois capteurs 28 et calculant leur moyenne pour délivrer un signal de mesure de la déformation longitudinale de l'éprouvette.

Sur la figure 5, on a représenté l'un des supports de capteurs de déformations transversales, susceptibles d'être montés sur l'extensomètre décrit en référence aux figures 1 à 4. Ce support est réalisé au moyen d'un barreau 38 de section en forme de I, dont l'extrémité inférieure des ailes a été découpée, d'un même côté, pour constituer des épaulements 39, 40 par lesquels le support 38 vient en appui sur les faces supérieure et extérieure de la couronne inférieure 2, l'âme du support en I 38 étant percée d'un orifice 41, susceptible d'être aligné avec l'un des perçages radiaux taraudés 5 de la couronne inférieure 2, de sorte que le support 38 puisse se monter sur la couronne inférieure 2 en utilisant les vis d'assemblage 4 utilisées pour la fixation des entretoises 3, et l'âme du support présentant également un second orifice 42 dans lequel peut être retenu, par tout moyen convenable connu, un capteur de déformations transversales.

Bien entendu, on utilisera un montage de trois capteurs de déformations transversales reliés de façon analogue à un conditionneur électronique.

On pourrait également utiliser un dispositif de fixation de ces supports de type »serre-joints«. L'extensomètre qui vient d'être décrit, est utilisé de la manière suivante.

Après branchement et réglage de la sensibilité de l'appareillage électronique associé, on desserre les vis d'assemblage 4 des entretoises 3 pour s'assurer que les couronnes 1 et 2 portent bien sur les épaulements 6 des entretoises 3. Puis, on resserre les vis 4, et on efface les pointeaux 15, c'est-à-dire qu'on les fait se déplacer vers l'extérieur des couronnes 1 et 2 en vissant les écrous de positionnement 23. On dispose une éprouvette surfacée au soufre et ébavurée sur une surface plane, et la couronne de positionnement (non représentée) à plat autour de l'éprouvette. On positionne ensuite l'extensomètre autour de l'éprouvette en le posant sur la couronne de positionnement.

On dévisse progressivement les trois écrous de positionnement 23 d'une couronne 1 ou 2, de manière à ce que les pointeaux 15 correspondants arrivent simultanément au contact de l'éprouvette, et ce jusqu'à ce que les écrous 23 soient libres. Puis, on effectue la même opération pour l'autre couronne. L'extensomètre est alors solidaire de l'éprouvette. On transporte l'ensemble, moins la couronne de positonnement, entre les plateaux d'une presse et on branche le connecteur sur le boîtier-support 37. On procède au réglage du »zéro électrique« sur chacun des capteurs 28 en agissant sur les têtes 33 des vis micrométriques 32, puis on bloque ces vis 32 à l'aide des contre-écrous 75.

On enlève les entretoises 3, et on monte les capteurs transversaux éventuellement.

On peut ensuite procéder à l'essai de compression simple ou cyclique de l'éprouvette.

Pour dégager l'extensomètre des ruines de l'éprouvette, qu'il est conseillé de ne pas écraser après la rupture, afin de ne pas détériorer l'extensomètre, il est indiqué de remettre les entretoises 3, d'effacer les pointeaux 15, puis de dégager l'extensomètre.

On constate sur la figure 6, où les courbes 43 et 44 correspondent aux enregistrements de l'évolution des contraintes en fonction des déformations, respectivement, pour une mesure longitudinale et une mesure transversale effectuées au moyen de l'extensomètre à béton selon l'invention, que ce dernier permet d'obtenir des résultats aussi bons que ceux obtenus par des dispositifs à jauges de déformations classiques, sans nécessiter la préparation de l'éprouvette requise avec ces dispositifs à jauges de déformations, et en obtenant des résultats immédiatement exploitables.

**Revendications**

1. Extensomètre à béton comportant au moins deux couronnes de supports (1, 2), chacune des couronnes étant munie de moyens de préhension d'une éprouvette à tester, ces moyens ayant au moins une tête déplaçable (17) par rapport à la couronne avec laquelle elle coopère, caractérisé par le fait que ladite tête est liée à la couronne avec laquelle elle coopère par un parallèlogramme déformable (9, 16, 11).

2. Extensomètre selon la revendication 1, caractérisé par le fait qu'il comporte des moyens (26) pour appliquer une force sur ladite tête déplaçable.

3. Extensomètre selon la revendication 2, caractérisé par le fait que lesdits moyens pour appliquer une force sont constitués par un élément élastique (26).

4. Extensomètre selon l'une des revendications précédentes, caractérisé en ce que le parallèlogramme déformable comporte un pointeau (15) terminé par ladite tête (17) une paire de lames flexibles (9, 11), une extrémité de chacune des lames étant solidarisée à la couronne avec laquelle coopère ladite tête (1, 2), et l'autre extrémité au pointeau (15).

5. Extensomètre selon la revendication 4, caractérisé en ce que la position dudit pointeau est réglable par un écrou (23) de positionnement coopérant avec une extrémité filetée (21, 22) dudit pointeau (15), opposée à l'extrémité supportant ladite tête (17), et disposée vers l'extérieur de la couronne sur un support de pointeau (7) dans laquelle le pointeau est monté, ledit support étant solidaire de ladite couronne.

6. Extensomètre selon l'une des revendications précédentes, caractérisé en ce que chaque parallèlogramme déformable est disposé de manière identique sur la couronne respective (1, 2), de façon à éliminer le déplacement relatif des têtes des parallèlogrammes correspondants.

7. Extensomètre selon l'une des revendications précédentes, caractérisé en ce que chaque couronne peut porter au moins un support susceptible de recevoir un capteur sensible (28) aux déformations transversales.

8. Extensomètre selon la revendication 7, caractérisé en ce que il comporte deux couronnes liées entre elles par des entretoises (3), et que le ou les supports de capteurs sensibles aux déformations transversales de l'éprouvette se montent sur l'une et/ou l'autre des couronnes en utilisant les moyens de montage des dites entretoises (3) sur ces couronnes (1, 2).

9. Extensomètre selon l'une des revendications précédentes, caractérisé par le fait que chaque couronne (1, 2) supporte trois parallèlogrammes déformables, disposés sensiblement à 120° l'un de l'autre, et situés respectivement dans trois plans concourants.

**Patentansprüche**

1. Dehnungsmeßgerät für Betonproben mit wenigstens zwei Stützkränzen (1, 2), wobei jeder Stützkranz mit Mitteln zum Greifen einer zu untersuchenden Probe versehen ist, wobei diese Mittel wenigstens einen Kopf (17) aufweisen, der in bezug auf den Stützkranz, mit dem er zusammenarbeitet, verschiebbar ist, dadurch gekennzeichnet, daß dieser Kopf mit dem Stützkranz, mit dem er zusammenarbeitet, durch ein verformbares Parallelogramm (9, 16, 11) verbunden ist.

2. Dehnungsmeßgerät nach Anspruch 1, dadurch gekennzeichnet, daß es Mittel (26) zum Anlegen einer Kraft an den verschiebbaren Kopf umfaßt.

3. Dehnungsmeßgerät nach Anspruch 2, dadurch gekennzeichnet, daß diese Mittel zum Anlegen einer Kraft durch ein elastisches Element (26) gebildet werden.

4. Dehnungsmeßgerät nach einem der vorhergehenden Ansprüche, dadurch gekennzeichnet, daß das verformbare Parallelogramm einen Haltestift (15), der in dem Kopf (17) endet, und ein Paar von flexiblen Streifen (9, 11) umfaßt, wobei ein Ende jedes Streifens an dem Stützkranz, mit dem der Kopf (1, 2) zusammenarbeitet, und das andere Ende an dem Haltestift (15) befestigt ist.

5. Dehnungsmeßgerät nach Anspruch 4, dadurch gekennzeichnet, daß die Position des Haltestiftes über eine Positionsmutter (23) einstellbar ist, die mit einem mit Gewinde versehenen Ende (21, 22) des Haltestiftes (15) zusammenarbeitet, das dem den Kopf (17) tragenden Ende gegenüberliegt, und an der Außenseite des Stützkranzes an einem Haltestiftträger (7) angeordnet ist, in dem der Haltestift montiert ist, wobei der Träger mit diesem Kranz fest verbunden ist.

6. Dehnungsmeßgerät nach einem der vorhergehenden Ansprüche, dadurch gekennzeichnet, daß jedes verformbare Parallelogramm in identischer Weise auf dem entsprechenden Kranz (1, 2) angeordnet ist, um eine Relativverschiebung der Köpfe der entsprechenden Parallelogramme zu eliminieren.

7. Dehnungsmeßgerät nach einem der vorhergehenden Ansprüche, dadurch gekennzeichnet, daß jeder Kranz wenigstens einen Träger tragen kann, der geeignet ist, einen gegenüber transversalen Deformationen empfindlichen Nehmer (28) aufzunehmen.

8. Dehnungsmeßgerät nach Anspruch 7, dadurch gekennzeichnet, daß es zwei Kränze umfaßt, die miteinander durch Verstrebungen (3) verbunden sind, und daß der oder die Träger für die gegenüber transversalen Deformationen der Probe empfindlichen Nehmer auf dem einen und/oder anderen Kranz montiert sind, wobei die Montagemittel dieser Verstrebungen (3) auf diesen Kränzen (1, 2) verwendet sind.

9. Dehnungsmeßgerät nach einem der vorhergehenden Ansprüche, dadurch gekennzeichnet, daß jeder Kranz (1, 2) drei verformbare Parallelogramme trägt, die im wesentlichen um 120° gegeneinander versetzt angeordnet sind und sich in drei zusammenlaufenden Ebenen befinden.

**Claims**

1. An extensometer for concrete comprising at least two rings of supports (1, 2), each of the rings being provided with means for gripping the test piece, said means having at least one head (17) movable relative to the ring with which it co-operates, characterized by the fact that said head is linked to the ring with which it co-operates by a deformable parallelogram (9, 16, 11).

2. An extensometer according to claim 1, characterized by the fact that it includes means (26) for applying a force to said movable head.

3. An extensometer according to claim 2, characterized by the fact that said means for applying a force are constituted by a resilient member (26).

4. An extensometer according to any preceding claim, characterized in that the deformable parallelogram includes a punch (15) terminated by said head (17), a pair of flexible blades (9, 11), one end of each of the blades being fixed to the ring with which said head (1, 2) co-operates, and the other ends to the end of the punch (15).

5. An extensometer according to claim 4, characterized in that the position of said punch is adjustable by a positioning nut (23) co-operating with a threaded end (21, 22) of said punch (15) opposite to the end supporting said head (17), and disposed towards the outside of the ring on a punch support (7) in which the punch is mounted, said support being fixed to said ring.

6. An extensometer according to any preceding claim, characterized in that each deformable parallelogram is disposed in identical manner on its respective ring (1, 2) in such a manner as to eliminate relative displacement of the heads of the corresponding parallelograms.

7. An extensometer according to any preceding claim, characterized in that each ring is capable of carrying at least one support suitable for receiving a sensor which (28) is sensitive to transverse deformation.

8. An extensometer according to claim 7, characterized in that it comprises two rings interconnected by distance pieces (3), and that the support(s) for sensors sensitive to transverse deformation of the test piece are mounted on one or both of the rings using the means for mounting said distance pieces (3) on said rings (1, 2).

9. An extensometer according to any preceding claim, characterized by the fact that each ring (1, 2) supports three deformable parallelograms disposed substantially at 120° to one another and respectively situated in three concurrent planes.

FIG.1

FIG . 2

FIG.4

22 19
17
18
24 8
20 16 9
21
11
12 36 1

37

1

30

29 3

30 36

29

28

33 31

7
14 13 14
23 15
27
11 25 26 9
10 8
2 35
31
33
35
34

35 33 31
2 32
34

FIG.3

FIG . 5

FIG . 6

13

0 034 991